# EUROPEAN PATENT APPLICATION

(11) **EP 4 325 419 A1**
(43) Date of publication of application: **21.02.2024**
(21) Application number: 22787845.1
(22) Date of filing: 16.02.2022
(51) Int. Cl.: G06Q 40/08

(54) **INFORMATION PROCESSING METHOD AND INFORMATION PROCESSING SYSTEM**

(30) Priority: 12.04.2021 JP 2021067253
(71) Applicant: Panasonic Intellectual Property Corporation of America, Torrance, CA 90504 (US)
(72) Inventor: KAWAMOTO, Hirokazu, Kadoma-shi, Osaka 571-0057 (JP); URABE, Hiroaki, Kadoma-shi, Osaka 571-0057 (JP)
(74) Representative: Novagraaf International SA
(86) International application number: PCT/JP2022/006246
(87) International publication number: WO 2022/219917

(57) **Abstract**

An information processing method includes processes of: obtaining a remote operation performed on a mobile body according to an instruction sent via communication from a remote operator terminal; obtaining a communication quality parameter of quality of the communication at a time when the remote operation is performed; calculating an insurance premium for the remote operation based on the remote operation and the communication quality parameter; and outputting the insurance premium calculated.

## Description

### [Technical Field]

The present disclosure relates to an information processing method and an information processing system for calculating an insurance premium for operations performed on a mobile body.

### [Background Art]

Conventionally, a method for calculating an insurance premium for operations performed on a mobile body by combining the attributes of a driver and driving operations has been disclosed (see Patent Literature (PTL) 1, for example).

### [Citation List]

### [Patent Literature]

[PTL 1] Japanese Patent No. 6600536

### [Summary of Invention]

### [Technical Problem]

In recent years, while services have emerged for performing remote operations on a mobile body through a remote-control system, the above-mentioned PTL 1 does not disclose a method for calculating an insurance premium for remote operations performed on a mobile body. Furthermore, since it cannot be said that the degree of risk when operations of a mobile body are performed by a passenger of the mobile body is the same as the degree of risk when remote operations of the mobile body are performed, it would therefore be difficult to calculate an insurance premium for remote operations using the insurance premium calculation method used when operations of the mobile body are performed by a passenger of the mobile body.

In view of this, the present disclosure provides an information processing method, and the like, that can calculate an insurance premium for remote operations.

### [Solution to Problem]

An information processing method according to the present disclosure is an information processing method executed by a computer and includes: obtaining a remote operation performed on a mobile body according to an instruction sent via communication from a remote operator terminal; obtaining a communication quality parameter of quality of the communication at a time when the remote operation is performed; calculating an insurance premium for the remote operation based on the remote operation and the communication quality parameter; and outputting the insurance premium calculated.

It should be noted that these generic or specific aspects may be implemented as a system, a method, an integrated circuit, a computer program, or a computer-readable recording medium, such as a CD-ROM, or may be implemented as any combination of a system, a method, an integrated circuit, a computer program, and a recording medium.

### [Advantageous Effects of Invention]

The information processing method, and the like, according to one aspect of the present disclosure can calculate an insurance premium for remote operations.

### [Brief Description of Drawings]

[FIG. 1]

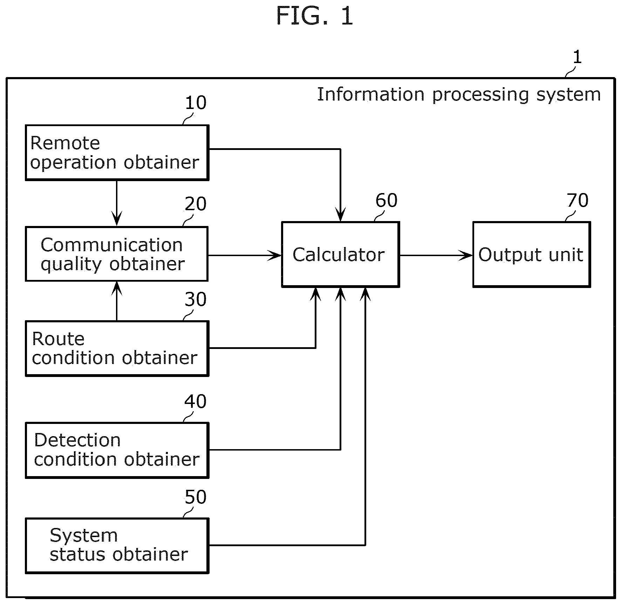

   FIG. 1 is a diagram illustrating one example of an information processing system according to an embodiment.
[FIG. 2]

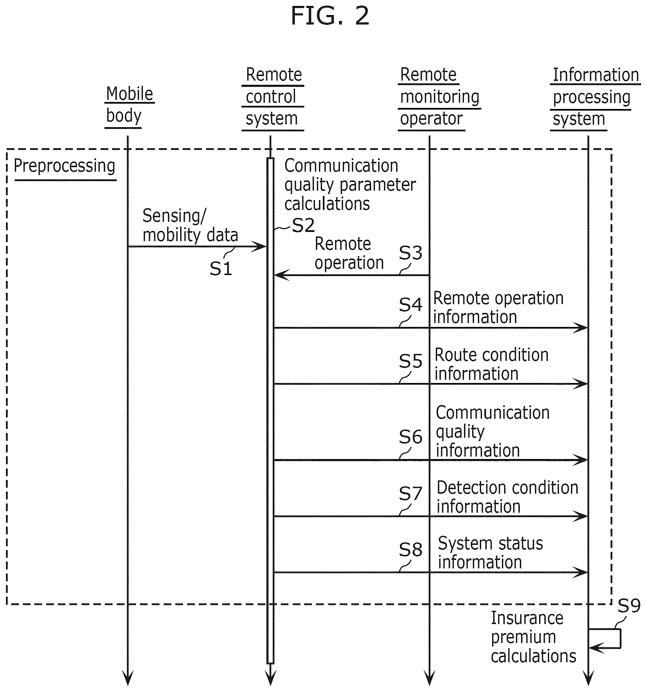

   FIG. 2 is a sequence diagram illustrating one example of the flow of information leading up to the calculation of an insurance premium.
[FIG. 3]

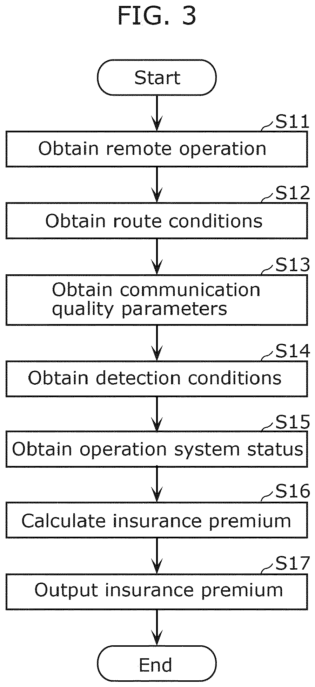

   FIG. 3 is a flowchart illustrating one example of operation of an information processing system according to the embodiment.
[FIG. 4]

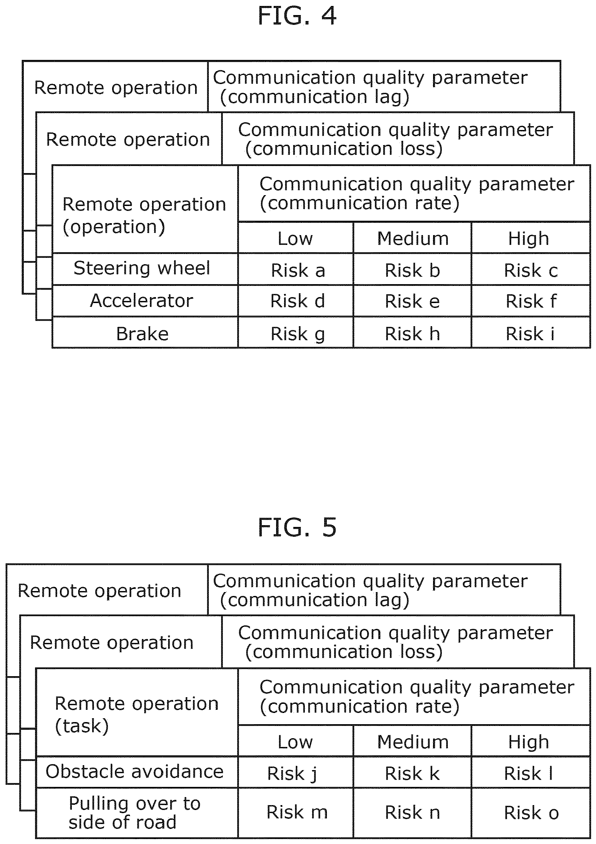

   FIG. 4 is one example of tables illustrating the degree of risk for each combination of a remote operation (operation) and a communication quality parameter.
[FIG. 5]
   FIG. 5 is one example of tables illustrating the degree of risk for each combination of a remote operation (task) and a communication quality parameter.
[FIG. 6]

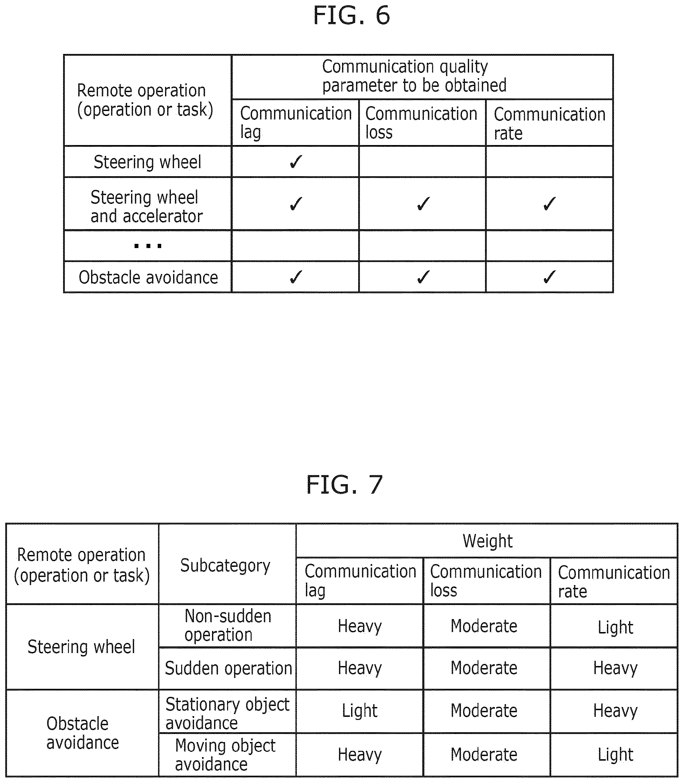

   FIG. 6 is a table illustrating one example of the types of communication quality parameters to be obtained for remote operations.
[FIG. 7]
   FIG. 7 is a table illustrating one example of weights assigned to communication quality parameters for remote operations.
[FIG. 8]

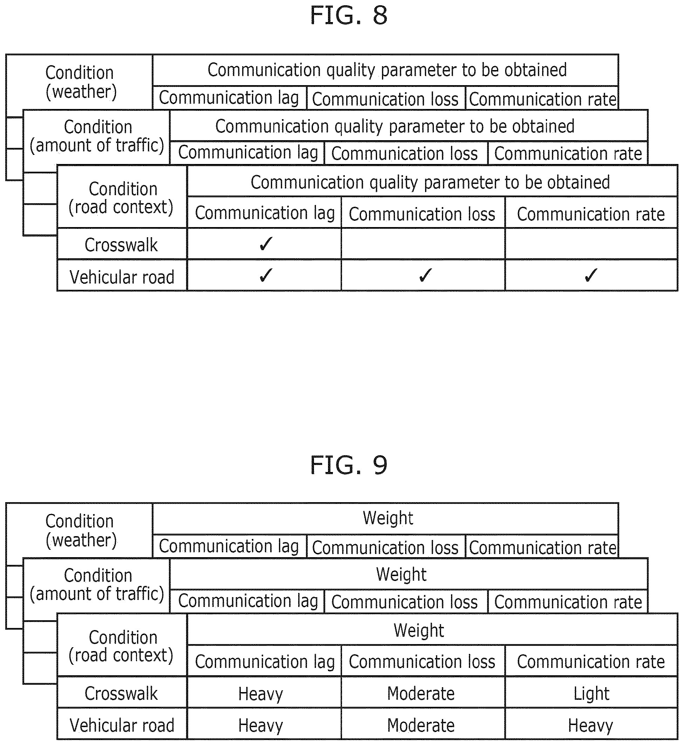

   FIG. 8 shows tables illustrating one example of types of communication quality parameters to be obtained for route conditions of a route on which a mobile body travels.
[FIG. 9]
   FIG. 9 shows tables illustrating one example of weights assigned to communication quality parameters for the route conditions of the route on which the mobile body travels.

### [Description of Embodiments]

An information processing method according to one aspect of the present disclosure is an information processing method executed by a computer and includes processes of: obtaining a remote operation performed on a mobile body according to instructions sent via communication from a remote operator terminal; obtaining a communication quality parameter when the remote operation is performed; calculating an insurance premium for the remote operation based on the remote operation and the communication quality parameter; and outputting the insurance premium calculated.

When a remote operation is performed on a mobile body, the quality of communication between a remote operator terminal and the mobile body impacts the degree of risk of the remote operation. This is because, when communication quality is poor, the remote operation is difficult to properly perform, thus increasing the degree of risk of the remote operation. In view of this, the insurance premium can be calculated for the remote operation based on communication quality parameters at the time when the remote operation is performed.

For example, in the calculating of the insurance premium, a degree of risk of the remote operation is determined according to the communication quality parameter, and the insurance premium is calculated based on the degree of risk determined.

Accordingly, the insurance premium can be accurately calculated based on the degree of risk determined according to the communication quality parameters at the time when the remote operation is performed.

For example, the information processing method may further include selecting a type of the communication quality parameter according to the remote operation, and in the calculating of the insurance premium, the insurance premium may be calculated based on the remote operation and the communication quality parameter of the type selected.

For example, depending on the remote operation performed, the types of communication quality parameters that impact the degree of risk of the remote operation may be different. In view of this, the insurance premium can be accurately calculated based on the communication quality parameters of the types selected according to the remote operation performed. Furthermore, since the types of communication quality parameters to be obtained may be reduced, the amount of calculations performed when calculating the insurance premium can be decreased.

For example, the information processing method may further include weighting the communication quality parameter according to the remote operation, and in the calculating of the insurance premium, the insurance premium may be calculated based on the remote operation and the communication quality parameter weighted.

For example, depending on the remote operation performed, the degree of impact of the communication quality parameters on the degree of risk of the remote operation may be different. In view of this, the insurance premium can be accurately calculated based on the communication quality parameters that have been weighted according to the remote operation performed.

For example, the information processing method may further include obtaining a route condition of a route traveled by the mobile body on which the remote operation is performed and selecting a type of the communication quality parameter according to the route condition, and in the calculating of the insurance premium, the insurance premium may be calculated based on the remote operation and the communication quality parameter of the type selected.

For example, depending on the route conditions (e.g., road context, weather, amount of traffic, or the like) of the mobile body on which the remote operation is performed, the types of communication quality parameters that impact the degree of risk of performing the remote operation may be different. In view of this, the insurance premium can be accurately calculated based on the communication quality parameters of the types selected in accordance with the route conditions of the mobile body on which the remote operation is performed. Furthermore, since the types of communication quality parameters to be obtained may be reduced, the amount of calculations performed when calculating the insurance premium can be decreased.

For example, the information processing method may further include obtaining a route condition of a route traveled by the mobile body on which the remote operation is performed and weighting the communication quality parameter according to the route condition, and in the calculating of the insurance premium, the insurance premium may be calculated based on the remote operation and the communication quality parameter weighted.

For example, depending on the route conditions of the route of the mobile body on which the remote operation is performed, the degree of impact of the communication quality parameters on the degree of risk of the remote operation may be different. In view of this, the insurance premium can be accurately calculated based on the communication quality parameters that have been weighted in accordance with the route conditions of the mobile body on which the remote operation is performed.

For example, the information processing method may further include obtaining a detection condition of surroundings of the mobile body on which the remote operation is performed, and in the calculating of the insurance premium, the insurance premium may be calculated based on the detection condition, the remote operation, and the communication quality parameter.

When a remote operation is performed on a mobile body, detection conditions (e.g., weather, sensor viewing angle, detection distance for image recognition, identification accuracy of such elements in the surrounding environment as roads, types of detectable objects, stopped state of detectable objects, or sensing frequency, or the like) of the surroundings of a mobile body on which a remote operation is performed may impact the degree of risk of the remote operation. This is because, when detection conditions are poor (e.g., surroundings are dark due to cloudy weather, sensor viewing angle is narrow, detection distance for image recognition is short, cannot identify if road is a sidewalk, vehicular road, or intersection, cannot detect bicycle, cannot recognize if detectable object is moving or stopped, or sensing frequency is low, or the like), the remote operation is difficult to properly perform, and thus, the degree of risk of performing the remote operation increases. In view of this, the insurance premium can be accurately calculated for the remote operation by using the detection conditions of the surroundings of the mobile body on which the remote operation is performed, as well as the communication quality parameters at the time when the remote operation is performed.

For example, the information processing method may further include obtaining an operation system status of a transport service that uses the mobile body on which the remote operation is performed, and in the calculating of the insurance premium, the insurance premium may be calculated based on the operation system status, the remote operation, and the communication quality parameter.

When a remote operation is performed on a mobile body, an operation system status of a transport service (e.g., automatic traveling system status, remote-control system status, or voice speech system status, or the like) that uses the mobile body on which the remote operation is performed may impact the degree of risk when performing the remote operation. This is because, when there is a system failure in the operation system (e.g., a failure such as an inability to perform automatic traveling, inability to perform a remote operation, voice speech operation failure, or the like), the remote operation is difficult to properly perform, thus increasing the degree of risk of the remote operation. In view of this, the insurance premium can be accurately calculated for the remote operation by using the operation system status of the transport service that uses the mobile body on which the remote operation is performed, as well as the communication quality parameters at the time when the remote operation is performed.

For example, the remote operation may include at least one of an actuator operation for controlling movement of the mobile body or a movement control task of the mobile body.

Accordingly, the insurance premium for the actuator operation for controlling movement of the mobile body or the movement control task of the mobile body can be calculated.

For example, the communication quality parameter may include at least one of communication rate, communication lag, or communication loss.

Accordingly, the insurance premium for the remote operation can be calculated based on the communication rate, communication lag, or communication loss at the time when the remote operation is performed.

An information processing system according to one aspect of the present disclosure includes: a remote operation obtainer that obtains a remote operation performed on a mobile body according to an instruction sent via communication from a remote operator terminal; a communication quality obtainer that obtains a communication quality parameter of quality of the communication at a time when the remote operation is performed; a calculator that calculates an insurance premium for the remote operation based on the remote operation and the communication quality parameter; and an output unit that outputs the insurance premium calculated.

Accordingly, an information processing system that is capable of calculating an insurance premium for a remote operation can be provided.

Hereinafter, embodiments are described in detail with reference to the drawings.

It should be noted that the embodiments described below merely illustrate general or specific examples of the present disclosure. The numerical values, shapes, materials, elements, the arrangement and connection states of the elements, steps, the order of the steps, etc., described in the following embodiments are mere examples, and are therefore not intended to limit the present disclosure.

### [Embodiment]

Hereinafter, an information processing system and an information processing method according to an embodiment of the present disclosure are described.

FIG. 1 is a diagram illustrating one example of information processing system 1 according to the embodiment.

Information processing system 1 is a system for calculating an insurance premium for remote operations performed on a mobile body. The mobile body is monitored and remotely operated by a remote-control system. Specifically, the mobile body is monitored and remotely operated by a remote monitoring operator via the remote-control system. While the mobile body is, for example, a vehicle, the mobile body may be a mobile body other than a vehicle (e.g., a robot, aircraft, marine vessel, or the like). Information processing system 1 is one example of a computer that executes an information processing method. The elements that information processing system 1 is composed of may be provided inside of a single housing or may be provided in a distributed manner. When the elements that information processing system 1 is composed of are provided in a distributed manner, the information processing method may be executed by multiple computers. Information processing system 1 may, for example, be implemented by a server. It should be noted that information processing system 1 may be part of the remote-control system.

Information processing system 1 includes remote operation obtainer 10, communication quality obtainer 20, route condition obtainer 30, detection condition obtainer 40, system status obtainer 50, calculator 60, and output unit 70. Information processing system 1 is a computer that includes a processor, communication interface, memory, and so on. The memory is read only memory (ROM), random access memory (RAM), or the like, that can store a program executed by the processor. Remote operation obtainer 10, communication quality obtainer 20, route condition obtainer 30, detection condition obtainer 40, system status obtainer 50, calculator 60, and output unit 70 are implemented by the processor that executes the program stored in memory, as well as the communication interface, and the like.

Remote operation obtainer 10 obtains remote operations performed on the mobile body according to instructions sent by the remote monitoring operator via communication from a remote operator terminal provided in the remote-control system. For example, wireless communication is performed between the remote operator terminal and the mobile body, and remote operations are performed on the mobile body via wireless communication. Remote operations include, for example, at least one of an actuator operation for controlling movement of the mobile body or a movement control task of the mobile body. For example, remote operation obtainer 10 obtains a remote operation performed (e.g., information indicating the type and degree to which the remote operation is performed). For example, remote operation obtainer 10 obtains operations performed on a steering wheel, accelerator, brake, or the like, or tasks, such as obstacle avoidance or pulling over to the side of a road. Furthermore, remote operation obtainer 10 obtains, for example, the degree to which operations are performed on the steering wheel, accelerator, brake, or the like.

Communication quality obtainer 20 obtains parameters indicating the quality of communication between the mobile body and the remote operator terminal provided in the remote-control system at the time when a remote operation is performed. For example, when a remote operation is performed, communication quality obtainer 20 obtains the communication quality parameters of sensing data or mobility data exchanged between the mobile body and the remote operator terminal. The communication quality parameters include, for example, at least one of communication rate, communication lag, or communication loss. In other words, the types of communication quality parameters include communication rate, communication lag, communication loss, and the like.

For example, remote operation obtainer 10 selects the types of communication quality parameters according to the remote operation. Furthermore, remote operation obtainer 10 assigns weights to communication quality parameters according to the remote operation. The selection of the types of communication quality parameters and the weighting of the communication quality parameters in accordance with the remote operation will later be described in more detail.

Route condition obtainer 30 obtains route conditions of the route traveled by the mobile body on which the remote operation is performed. The route conditions are, for example, the weather on a route, the amount of traffic on a route, the road context of a route (crosswalk or vehicular road, etc.), or the like. Route condition obtainer 30 selects the types of communication quality parameters according to the route conditions obtained. Furthermore, route condition obtainer 30 assigns weights to communication quality parameters according to the route conditions obtained. The selection of the types of communication quality parameters and the weighting of the communication quality parameters in accordance with route conditions will later be described in more detail.

Detection condition obtainer 40 obtains detection conditions of the surroundings of the mobile body on which the remote operation is performed. The detection conditions of the surroundings of the mobile body may be detection conditions of a sensor installed in the mobile body (e.g., camera, light detection and ranging (LiDAR), or the like) and may also be detection conditions of an infrastructure sensor in the surroundings of the mobile body. The detection conditions are, for example, sensor viewing angle, detection distance for image recognition performed by a sensor, sensing frequency, or the like.

System status obtainer 50 obtains the operation system status of the transport service that uses the mobile body on which the remote operation is performed. The operation system status is, for example, automatic traveling system status, remote-control system status, voice speech system status, or the like, and system status obtainer 50 obtains information on whether each of these systems are normal or abnormal.

Calculator 60 calculates an insurance premium for the remote operation based on the remote operation and the communication quality parameters obtained. Calculator 60 will later be described in more detail.

Output unit 70 outputs the insurance premium calculated. For example, output unit 70 outputs the insurance premium calculated to an assessor, service operator, or the like.

Next, the flow of information leading up to the calculation of the insurance premium will be described with reference to FIG. 2.

FIG. 2 is a sequence diagram illustrating one example of the flow of information leading up to the calculation of the insurance premium. FIG. 2 illustrates the flow of information between the mobile body, the remote-control system, the remote monitoring operator, and information processing system 1.

As shown in FIG. 2, preprocessing from step S1 to step S8 are performed before the calculation of the insurance premium.

First, sensing data, mobility data, and the like are transmitted from the mobile body to the remote-control system (step S1). With this, the remote-control system can calculate the communication quality parameters for communication between the remote-control system and the mobile body (step S2). Moreover, since the sensing data, mobility data, and the like, are transmitted periodically, the communication quality parameters may also be calculated periodically.

Next, the remote monitoring operator performs a remote operation on the mobile body via the remote-control system (step S3). For example, the remote monitoring operator performs a remote operation on the mobile body by operating a steering wheel, accelerator, brake, or the like that are provided on the remote-control system while watching a video or the like of the surroundings of the mobile body.

Next, the remote-control system transmits remote operation information indicating the remote operation performed on the mobile body to information processing system 1 (step S4). With this, information processing system 1 can obtain information on the remote operation.

Furthermore, the remote-control system transmits route conditions of the route traveled by the mobile body on which the remote operation is performed that have been obtained by a server or the like that manages information on the weather, amount of traffic, maps, or the like, to information processing system 1 (step S5). With this, information processing system 1 can obtain the route conditions of the route traveled by the mobile body on which the remote operation is performed.

Furthermore, the remote-control system transmits communication quality information indicating the communication quality parameters calculated to information processing system 1 (step S6). With this, information processing system 1 can obtain the communication quality parameters at the time when the remote operation is performed.

Furthermore, the remote-control system transmits detection condition information indicating the detection conditions of the surroundings of the mobile body on which the remote operation is performed, which is obtained from the mobile body or infrastructure or the like in the surroundings of the mobile body, to information processing system 1 (step S7). With this, information processing system 1 can obtain the detection conditions of the surroundings of the mobile body on which the remote operation is performed.

Furthermore, the remote-control system transmits, to information processing system 1, system status information that indicates the operation system status of the transport service that uses the mobile body on which the remote operation is performed, and is obtained from a server or the like that manages an automatic traveling system, remote-control system, voice speech system, or the like, (step S8). With this, information processing system 1 can obtain the operation system status of the transport service that uses the mobile body on which the remote operation is performed.

Information processing system 1 then calculates the insurance premium for the remote operation using various information including the communication quality parameters obtained through the processes from step S4 to step S8 (step S9).

Next, the operation of information processing system 1 will be described in detail with reference to FIG. 3.

FIG. 3 is a flowchart illustrating one example of operation of information processing system 1 according to the embodiment. It should be noted that since information processing system 1 is one example of a computer that executes the information processing method according to the embodiment, FIG. 3 is also a flowchart illustrating one example of the information processing method according to the embodiment.

First, remote operation obtainer 10 obtains a remote operation that is performed on the mobile body according to instructions sent via communication from the remote operator terminal (step S11). For example, remote operation obtainer 10 obtains, as the remote operation, information that a remote operation, such as a steering wheel operation, accelerator operation, braking operation, or the like has been performed, and obtains the steering wheel operation angle, the accelerator depression amount, the brake depression amount, or the like. Furthermore, remote operation obtainer 10 may, for example, obtain information indicating that a task, such as obstacle avoidance, pulling over to the side of a road, or the like has been performed, based on the conditions of the surroundings of the mobile body (condition of obstacles in the surroundings of the mobile body, position of the mobile body, or the like) at the time when the remote operation is performed.

Route condition obtainer 30 obtains the route conditions of the route traveled by the mobile body on which the remote operation is performed (step S12). For example, route condition obtainer 30 obtains, as route conditions, the road context indicating whether the road is a crosswalk or vehicular road, weather information such as that indicating cloudy or drizzling weather, or the amount of traffic for each type of obstacle (type such as pedestrians, bicycles, automobiles, or the like) on the route.

It should be noted that step S12 may be performed when there is a need to obtain route conditions. Cases where there is a need to obtain route conditions include, for example, cases where information processing system 1 receives a request to calculate a highly-accurate insurance premium from the terminal or the like of an insurance business operator or a user.

Next, communication quality obtainer 20 obtains the communication quality parameters at the time when the remote operation is performed (step S13). For example, communication quality obtainer 20 obtains types of communication quality parameters including communication rate, communication lag, communication loss, or the like. For example, calculator 60 determines the degree of risk of the remote operation according to the communication quality parameters obtained. Here, the determination method of the degree of risk of the remote operation will be described with reference to FIG. 4 and FIG. 5.

FIG. 4 is one example of tables illustrating the degree of risk for each combination of a remote operation (operation) and a communication quality parameter.

FIG. 5 is one example of tables illustrating the degree of risk for each combination of a remote operation (task) and a communication quality parameter.

For example, calculator 60 determines the degree of risk of a remote operation by referencing a table like those shown in FIG. 4 or FIG. 5. As illustrated in FIG. 4, when the remote operation performed on the mobile body is a steering wheel operation and the communication rate at that time is low, for example, the degree of risk of the remote operation is determined to be "Risk a". Furthermore, as illustrated in FIG. 5, when the remote operation performed on the mobile body is obstacle avoidance and the communication rate at that time is low, for example, the degree of risk of the remote operation is determined to be "Risk j". For example, "Risk a", "Risk b", "Risk c", and so forth are determined in advance. For example, a degree of risk is set for each combination of a remote operation and a communication quality parameter such that the degree of risk of performing a remote operation in a state where communication quality is low (poor) becomes higher than the degree of risk of performing a remote operation in a state where communication quality is high (good).

It should be noted that the types of communication quality parameters to be obtained may be selected according to the remote operation. This will be described with reference to FIG. 6.

FIG. 6 is a table illustrating one example of the types of communication quality parameters to be obtained for remote operations.

For example, when the remote operation is a steering wheel operation, remote operation obtainer 10 selects communication lag as the type of communication quality parameter to be obtained. This is because communication lag may significantly impact the degree of risk of steering wheel operations performed remotely. Furthermore, when the remote operations performed consist of steering wheel and accelerator operations, or when the remote operation consists of obstacle avoidance, communication lag, communication loss, and communication rate are selected as the types of communication quality parameters to be obtained. This is because communication lag, communication loss, and communication rate may significantly impact the degree of risk of both steering wheel and accelerator operations performed remotely, as well as the degree of risk of obstacle avoidance. It should be noted that the combinations of the remote operations and the types of communication quality parameters to be obtained as illustrated in FIG. 6 are merely an example and the combinations are not limited to those shown.

It should be noted that the communication quality parameters to be obtained may be weighted according to the remote operation. This will be described with reference to FIG. 7.

FIG. 7 is a table illustrating one example of weights assigned to communication quality parameters for remote operations. It should be noted that remote operations may be divided into subcategories as illustrated in FIG. 7. Specifically, when the operation is a steering wheel operation, the operation may be divided into subcategories to indicate whether the operation is a sudden operation, and when the task is obstacle avoidance, the task may be divided into subcategories to indicate whether a stationary object is avoided or a moving object is avoided.

For example, when the remote operation performed is a sudden operation of the steering wheel, remote operation obtainer 10 assigns heavy weight to communication lag, moderate weight to communication loss, and heavy weight to communication rate. This is because communication lag or communication rate may significantly impact the degree of risk of sudden steering wheel operations performed remotely. Depending on the weight assigned to a communication quality parameter, the degree of risk that is determined changes. For example, compared to the degree of risk determined for a sudden steering wheel operation performed remotely when the communication rate is low and where weights are not assigned to the communication quality parameters, in a case where heavy weight is assigned as illustrated in FIG. 7, the degree of risk of the remote operation will be larger in proportion to the weight assigned.

Furthermore, the types of communication quality parameters to be obtained may be selected according to the route conditions of the route on which the mobile body travels. This will be described with reference to FIG. 8.

FIG. 8 is a table illustrating one example of the types of communication quality parameters to be obtained for the conditions of the route on which the mobile body travels.

For example, when the route condition obtained is a road context indicating a crosswalk, route condition obtainer 30 selects communication lag as the type of communication quality parameter to be obtained (in other words, communication loss and communication rate are not selected). This is because communication lag may significantly impact the degree of risk of remote operations performed at a crosswalk. Here, route condition obtainer 30 may obtain the amount of traffic at the crosswalk as a route condition, and when the amount of traffic is low (e.g., case of a crosswalk with satisfactory visibility), communication loss and communication rate need not be selected. Furthermore, when the road context indicates a vehicular road, communication lag, communication loss, and communication rate are selected as the types of communication quality parameters to be obtained. This is because communication lag, communication loss, and communication rate significantly impact the degree of risk of remote operations performed on a vehicular road. For example, communication lag, communication loss, and communication rate may impact the degree of risk of sudden remote operations performed to avoid a vehicle parked on a vehicular road. It should be noted that the combinations of the route conditions and the communication quality parameters to be obtained as illustrated in FIG. 8 are merely an example and the combinations are not limited to those shown.

It should be noted that the communication quality parameters to be obtained may be weighted according to the route conditions of the route on which the mobile body travels. This will be described with reference to FIG. 9.

FIG. 9 shows tables illustrating one example of weights assigned to communication quality parameters for the conditions of the route on which the mobile body travels.

For example, when the route condition obtained is a road context indicating a vehicular road, route condition obtainer 30 assigns heavy weight to communication lag, moderate weight to communication loss, and heavy weight to communication rate. This is because communication lag or communication rate may significantly impact the degree of risk of remote operations performed on a vehicular road. Depending on the weight assigned to a communication quality parameter, the degree of risk that is determined changes. For example, when compared to the degree of risk determined for a remote operation performed on a vehicular road when the communication rate is low and where weights are not assigned to the communication quality parameters, in a case where heavy weight is assigned as illustrated in FIG. 9, the degree of risk of the remote operation will be larger in proportion to the weight assigned.

Returning to the description of FIG. 3, next, detection condition obtainer 40 obtains the detection conditions of the surroundings of the mobile body on which the remote operation is performed (step S14). For example, detection condition obtainer 40 obtains, as the detection conditions, information on the weather, sensor viewing angle, detection distance for image recognition by a sensor, identification accuracy of such elements in the surrounding environment as roads, types of detectable objects, stopped state of detectable objects, sensing frequency, or the like. For example, for remote operations performed when it is lightly raining, sensing accuracy or the like may be obtained. When the road environment is complex, the road type, such as sidewalk, vehicular road, or intersection, may be determined. The detection condition obtainer may detect a wheelchair, baby stroller, debris lying on the road, or the like. The detection condition obtainer may determine, as the stopped state of detectable objects, whether a vehicle is stopped. Furthermore, when remote operations are performed to restore autonomous movement after falling into a ditch, since detection through image recognition of the ditch is to be performed, the image recognition accuracy, or the like, may be obtained.

It should be noted that step S14 may be performed when there is a need to obtain detection conditions. Cases where there is a need to obtain detection conditions include, for example, cases where information processing system 1 receives a request to calculate a highly-accurate insurance premium from the terminal or the like of an insurance business operator or a user.

Next, system status obtainer 50 obtains the operation system status of the transport service that uses the mobile body on which the remote operation is performed (step S15). For example, system status obtainer 50 obtains, as the operation system status, the automatic traveling system status, remote-control system status, voice speech system status, or the like. For example, when performing remote operations to avoid collision with a person, the system status obtainer may obtain the voice speech system status (e.g., system that functions to generate speech to inform the person that the mobile body is "passing through").

It should be noted that step S15 may be performed when there is a need to obtain the operation system status. Cases where there is a need to obtain the operation system status include, for example, cases where information processing system 1 receives a request to calculate a highly-accurate insurance premium from the terminal or the like of an insurance business operator or a user.

Next, calculator 60 calculates the insurance premium for the remote operation based on the remote operation and the communication quality parameters (step S16). For example, calculator 60 determines the degree of risk of the remote operation and calculates the insurance premium based on the degree of risk determined as described with reference to FIG. 4 and FIG. 5. For example, calculator 60 calculates the insurance premium such that the insurance premium is high if the degree of risk of the remote operation is high, and calculates the insurance premium such that the insurance premium is low if the degree of risk of the remote operation is low.

Furthermore, for example, calculator 60 may calculate the insurance premium based on the remote operation and the communication quality parameters of the types selected by remote operation obtainer 10 or route condition obtainer 30. Depending on the remote operation or the route conditions, there are types of communication parameters (e.g., communication rate, communication lag, or communication loss) that tend to impact the degree of risk of the remote operation. For this reason, the types of communication quality parameters may be selected as shown in FIG. 6 and FIG. 8, and the insurance premium may be calculated based on the communication quality parameters of the types selected. With this, the insurance premium can be accurately calculated. Furthermore, since the types of communication quality parameters to be obtained may be reduced, the amount of calculations performed when calculating the insurance premium can be decreased.

Furthermore, calculator 60 may, for example, calculate the insurance premium based on the remote operation and the communication quality parameters to which weights are assigned by remote operation obtainer 10 or route condition obtainer 30. Depending on the remote operation or the route conditions, there are types of communication parameters (e.g., communication rate, communication lag, or communication loss) that tend to impact the degree of risk of the remote operation. For this reason, the communication quality parameters may be weighted according to the remote operation or the route conditions as shown in FIG. 7 and FIG. 9, and the insurance premium may be calculated based on the weighted communication quality parameters. With this, the insurance premium can be accurately calculated.

Furthermore, calculator 60 may, for example, calculate the insurance premium based on the detection conditions of the surroundings of the mobile body on which the remote operation is performed, the remote operation, and the communication quality parameters. When a remote operation is performed on a mobile body, since the detection conditions of the surroundings of the mobile body on which the remote operation is performed impact the degree of risk of the remote operation, the insurance premium may be calculated based on the detection conditions of the surroundings of the mobile body on which the remote operation is performed. Since the detection conditions of the surroundings of the mobile body are also used to calculate the insurance premium, the insurance premium can be accurately calculated.

Furthermore, calculator 60 may, for example, calculate the insurance premium based on the operation system status of the transport service that uses the mobile body on which the remote operation is performed, as well as the remote operation and the communication quality parameters. When a remote operation is performed on a mobile body, since the operation system status of the transport service that uses the mobile body on which the remote operation is performed impacts the degree of risk of the remote operation, the insurance premium may be calculated based on the operation system status of the transport service that uses the mobile body on which the remote operation is performed. Since the operation system status is used to calculate the insurance premium, the insurance premium can be accurately calculated.

Output unit 70 then outputs the insurance premium calculated (step S17). With this, the assessor, service operator, or the like, can know the insurance premium for the remote operation.

As described above, when a remote operation is performed on the mobile body, the quality of communication between the remote operator terminal and the mobile body impacts the degree of risk of the remote operation. This is because, when communication quality is poor, the remote operation is difficult to properly perform, thus increasing the degree of risk of the remote operation. In view of this, the insurance premium can be calculated for the remote operation based on the communication quality parameters at the time when the remote operation is performed.

### [Other Embodiments]

Although the information processing method and information processing system 1 according to one or more aspects of the present disclosure have been described on the basis of the foregoing embodiment, the present disclosure is not limited to the embodiment. The one or more aspects may thus include forms obtained by making various modifications to various embodiments that can be conceived by those skilled in the art, as well as forms obtained by combining elements in different embodiments, without materially departing from the essence of the present disclosure.

For example, in the above-mentioned embodiment, while an example was described where information processing system 1 includes route condition obtainer 30, detection condition obtainer 40, and system status obtainer 50, information processing system 1 need not include at least one of route condition obtainer 30, detection condition obtainer 40, or system status obtainer 50. That is to say, weights need not be assigned to the communication quality parameters according to the remote operation, and in the calculation of the insurance premium, the insurance premium need not be calculated based on the remote operation and the weighted communication quality parameters. Furthermore, the route conditions of the route traveled by the mobile body on which the remote operation is performed need not be obtained, the types of communication quality parameters need not be selected according to the route conditions, and in the calculation of the insurance premium, the insurance premium need not be calculated based on the remote operation and the communication quality parameters of the types selected. Moreover, the route conditions of the route traveled by the mobile body on which the remote operation is performed need not be obtained, the communication quality parameters need not be weighted according to the route conditions, and in the calculation of the insurance premium, the insurance premium need not be calculated based on the remote operation and the weighted communication quality parameters. Additionally, the detection conditions of the surroundings of the mobile body on which the remote operation is performed need not be obtained, and in the calculation of the insurance premium, the insurance premium need not be calculated based on the detection conditions, the remote operation, and the communication quality parameters. Furthermore, the operation system status of the transport service that uses the mobile body on which the remote operation is performed need not be obtained, and in the calculation of the insurance premium, the insurance premium need not be calculated based on the operation system status, the remote operation, and the communication quality parameters.

The present disclosure may, for example, be implemented as a program for causing a processor to execute the steps included in the information processing method. Furthermore, the present disclosure may be implemented as a non-transitory, computer-readable storage medium, such as a CD-ROM, on which the program is recorded.

For example, when implementing the present disclosure as a program (software), each step is performed by way of the program being executed using the hardware resources of a computer, such as a CPU, memory, input/output (I/O) circuit, or the like. That is to say, each step is performed by way of the CPU obtaining data from the memory, I/O circuit, or the like, performing arithmetic operations, and outputting the results of the arithmetic operations to the memory, I/O circuit, or the like.

It should be noted that, in the above-mentioned embodiment, each element included in information processing system 1 may be configured in the form of dedicated hardware, or may be implemented by executing a software program suitable for the element. Each element may be implemented by a program executing component, such as a CPU or processor, reading out and executing the software program stored in a storage medium, such as a hard disk or semiconductor memory.

Some or all of the functions of information processing system 1 according to the above-mentioned embodiment are typically implemented as a large-scale integration (LSI) circuit, which is an integrated circuit (IC). They may take the form of individual chips, or some or all of them may be encapsulated into a single chip. Furthermore, such an IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connections and the settings of circuit cells inside an LSI may be employed.

Furthermore, as long as they do not depart from the essence of the present disclosure, various modifications of the embodiments of the present disclosure that are conceivable by those skilled in the art are intended to be included in the scope of the present disclosure.

### [Industrial Applicability]

The present disclosure can be applied to a system that performs remote operations on a mobile body.

### [Reference Signs List]

- 1: information processing system
- 10: remote operation obtainer
- 20: communication quality obtainer
- 30: route condition obtainer
- 40: detection condition obtainer
- 50: system status obtainer
- 60: calculator
- 70: output unit

## Claims

1. An information processing method that is executed by a computer, the information processing method comprising:
obtaining a remote operation performed on a mobile body according to an instruction sent via communication from a remote operator terminal;
obtaining a communication quality parameter of quality of the communication at a time when the remote operation is performed;
calculating an insurance premium for the remote operation based on the remote operation and the communication quality parameter; and
outputting the insurance premium calculated.

2. The information processing method according to claim 1, wherein
in the calculating of the insurance premium:
a degree of risk of the remote operation is determined according to the communication quality parameter; and
the insurance premium is calculated based on the degree of risk determined.

3. The information processing method according to claim 1 or 2, further comprising:
selecting a type of the communication quality parameter according to the remote operation, wherein
in the calculating of the insurance premium, the insurance premium is calculated based on the remote operation and the communication quality parameter of the type selected.

4. The information processing method according to any one of claims 1 to 3, further comprising:
weighting the communication quality parameter according to the remote operation, wherein
in the calculating of the insurance premium, the insurance premium is calculated based on the remote operation and the communication quality parameter weighted.

5. The information processing method according to any one of claims 1 to 4, further comprising:
obtaining a route condition of a route traveled by the mobile body on which the remote operation is performed; and
selecting a type of the communication quality parameter according to the route condition, wherein
in the calculating of the insurance premium, the insurance premium is calculated based on the remote operation and the communication quality parameter of the type selected.

6. The information processing method according to any one of claims 1 to 5, further comprising:
obtaining a route condition of a route traveled by the mobile body on which the remote operation is performed; and
weighting the communication quality parameter according to the route condition, wherein
in the calculating of the insurance premium, the insurance premium is calculated based on the remote operation and the communication quality parameter weighted.

7. The information processing method according to any one of claims 1 to 6, further comprising:
obtaining a detection condition of surroundings of the mobile body on which the remote operation is performed, wherein
in the calculating of the insurance premium, the insurance premium is calculated based on the detection condition, the remote operation, and the communication quality parameter.

8. The information processing method according to any one of claims 1 to 7, further comprising:
obtaining an operation system status of a transport service that uses the mobile body on which the remote operation is performed, wherein
in the calculating of the insurance premium, the insurance premium is calculated based on the operation system status, the remote operation, and the communication quality parameter.

9. The information processing method according to any one of claims 1 to 8, wherein
the remote operation includes at least one of an actuator operation for controlling movement of the mobile body or a movement control task of the mobile body.

10. The information processing method according to any one of claims 1 to 9, wherein
the communication quality parameter includes at least one of communication rate, communication lag, or communication loss.

11. An information processing system comprising:
a remote operation obtainer that obtains a remote operation performed on a mobile body according to an instruction sent via communication from a remote operator terminal;
a communication quality obtainer that obtains a communication quality parameter of quality of the communication at a time when the remote operation is performed;
a calculator that calculates an insurance premium for the remote operation based on the remote operation and the communication quality parameter; and
an output unit that outputs the insurance premium calculated.
